# EUROPEAN PATENT SPECIFICATION

(11) **EP 3 690 572 B1**
(45) Date of publication and mention of the grant of the patent: **07.12.2022**
(21) Application number: 20154612.4
(22) Date of filing: 30.01.2020
(51) Int. Cl.: G05B 19/4065

(54) **OPERATING CONDITION MANAGEMENT SYSTEM, OPERATING CONDITION MANAGEMENT METHOD, AND OPERATING CONDITION MANAGEMENT COMPUTER PROGRAM**
BETRIEBSBEDINGUNGSVERWALTUNGSSYSTEM, BETRIEBSBEDINGUNGSVERWALTUNGSVERFAHREN UND BETRIEBSBEDINGUNGSVERWALTUNGSCOMPUTERPROGRAMM
SYSTÈME DE GESTION DE CONDITIONS DE FONCTIONNEMENT, PROCÉDÉ DE GESTION DE CONDITIONS DE FONCTIONNEMENT ET PROGRAMME INFORMATIQUE DE GESTION DE CONDITIONS DE FONCTIONNEMENT

(30) Priority: 30.01.2019 JP 2019014798
(43) Date of publication of application: 05.08.2020
(73) Proprietor: DGSHAPE Corporation, Hamamatsu-shi, Shizuoka 431-2103 (JP)
(72) Inventor: ASAHINA, Yoshimitsu, Shizuoka, 431-2103 (JP)
(74) Representative: Grünecker Patent- und Rechtsanwälte PartG mbB

(56) References cited:
- US-A1- 2003 182 014
- US-A1- 2004 148 136
- US-A1- 2018 246 494

## Description

### BACKGROUND OF THE INVENTION

### 1. Field of the Invention

The present invention relates to operating condition management systems, operating condition management methods, and operating condition management computer programs.

### 2. Description of the Related Art

Cutting apparatuses known in the related art machine workpieces into desired shapes. JP 2017-094437 A, for example, discloses a dental cutting apparatus including a retainer, a gripper, and a conveyor. The retainer retains a workpiece made of a dental material. The gripper grips a machining tool to carry out machining (e.g., cutting and/or grinding) on the workpiece. The conveyor moves at least one of the retainer and the machining tool relative to the other one of the retainer and the machining tool. An operating condition management system according to the preamble of claim 1 is disclosed in US 2018/246494 A1.

### SUMMARY OF THE INVENTION

In recent years, dental cutting apparatuses have found a wide variety of uses for machining. This increases the diversity of dental materials for workpieces to be machined. Examples of such dental materials include: resin materials, such as polymethyl methacrylate (PMMA) resin, polyether ether ketone (PEEK) resin, glass-reinforced resin, and hybrid resin; ceramic materials, such as glass ceramic and zirconia; metallic materials, such as cobalt-chrome sintered metal; wax; and gypsum. Various dental products are fabricated using dental cutting apparatuses. Examples of such dental products include: dental prosthetics, such as a crown, a bridge (see FIG. 14), a coping, an inlay, an onlay, a veneer, and a custom abutment; an artificial tooth (see FIG. 15); and a denture base (see FIG. 16).

Dental cutting apparatuses thus machine various types of dental materials into dental products having various shapes. Depending on the type of machining, the operating time of a cutting apparatus (i.e., the time required for machining) varies considerably. This creates a need for dental laboratories, each owning a plurality of cutting apparatuses, to determine the operating conditions of the cutting apparatuses in a centralized manner in making, for example, machining plans.

In this regard, DGSHAPE Corporation issued a press release on February 1, 2018. The press release is titled "DGSHAPE Corporation Announces Launch of New Dental Milling Machines DWX-52DCi and DWX-52D" and subtitled "Newly Developed Special Software DWIN-DEX Supports Business Management of Dental Laboratories". A search for the press release was conducted on the Internet on December 17, 2018. The press release is available online at the following URL: https://www.rolanddg.com/ja/news/2018/180201-new-dgshape-dental-mills-meet-increasing-demand-for-lab-friendly-automation. This non-patent document discloses the software that enables users to collectively check the operating conditions of a plurality of cutting apparatuses in each dental laboratory. The software disclosed in the non-patent document, however, makes it necessary for each cutting apparatus to have an interface adapted for use with the software. This limits the models of cutting apparatuses for which the software is usable. Consequently, the software fails to enable users to collectively determine the operating conditions of, for example, old model cutting apparatuses that have been used with affection for a long time or cutting apparatuses manufactured by different manufacturers.

Accordingly, embodiments of the present invention are set out in the appended set of claims 1-6 and provide an operating condition management system, an operating condition management method, and an operating condition management computer program that are able to check operating conditions of cutting apparatuses of various models.

One preferred embodiment of the present invention provides an operating condition management system including at least one cutting apparatus, at least one cutting controller, an information acquirer, an information processor, and a display unit. The cutting apparatus machines a workpiece. The cutting controller controls the cutting apparatus. The information acquirer is communicably connected to the cutting controller. The information acquirer acquires, from the cutting controller, status discriminating information indicating states of the cutting apparatus. The information processor is communicably connected to the information acquirer. The information processor determines an operating condition of the cutting apparatus in accordance with the status discriminating information. The display unit is communicably connected to the information processor. The display unit presents the operating condition of the cutting apparatus.

Another preferred embodiment of the present invention provides an operating condition management method for managing an operating condition of a cutting apparatus to machine a workpiece. The operating condition management method includes an information acquiring step, an information processing step, and a presenting step. The information acquiring step involves acquiring, from a cutting controller to control the cutting apparatus, status discriminating information indicating states of the cutting apparatus. The information processing step involves determining the operating condition of the cutting apparatus in accordance with the status discriminating information. The presenting step involves presenting the operating condition of the cutting apparatus on a display unit.

The preferred embodiments of the present invention would make it possible to determine the operating condition of the cutting apparatus in accordance with the status discriminating information if the cutting apparatus includes no interface adapted for use with the operating condition management system. Thus, if a dental laboratory has, for example, both of a cutting apparatus of the latest model and a cutting apparatus of an old model, the preferred embodiments of the present invention would make it possible to collectively present the operating conditions of the cutting apparatuses in the dental laboratory. This enables a manager to check the operating conditions of the cutting apparatuses in a centralized manner and use the results of checking for, for example, creation of machining plans or overall operation management of the dental laboratory. Consequently, the present invention saves the time and trouble of compiling the operating conditions and thus enhances convenience of users.

Various preferred embodiments of the present invention provide an operating condition management system, an operating condition management method, and an operating condition management computer program that are able to check operating conditions of cutting apparatuses of various models.

### BRIEF DESCRIPTION OF THE DRAWINGS

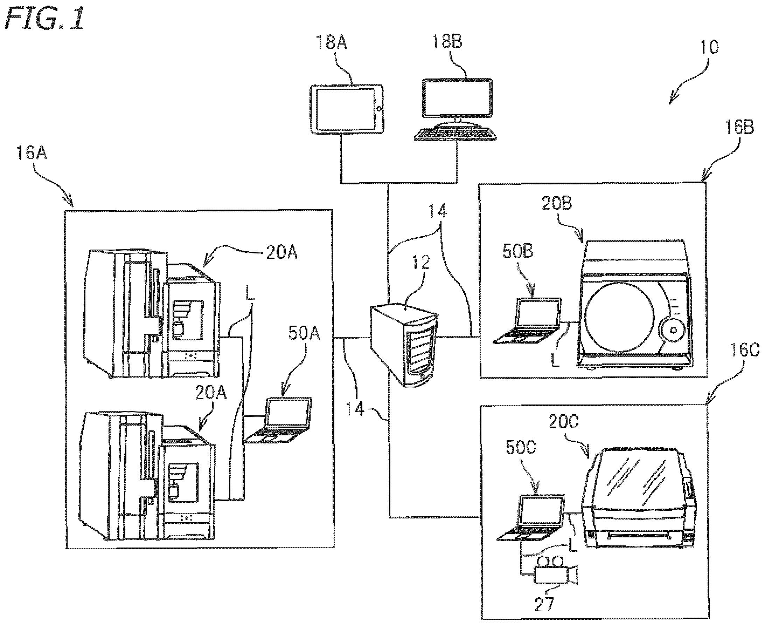

FIG. 1 is a schematic diagram illustrating an exemplary configuration of an operating condition management system according to an embodiment of the present invention.

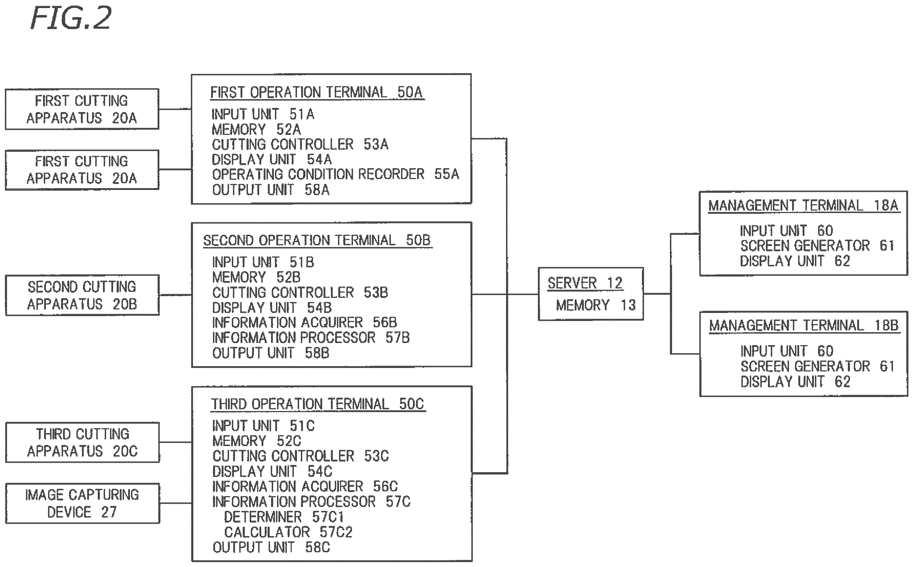

FIG. 2 is a functional block diagram of the operating condition management system according to the embodiment of the present invention.

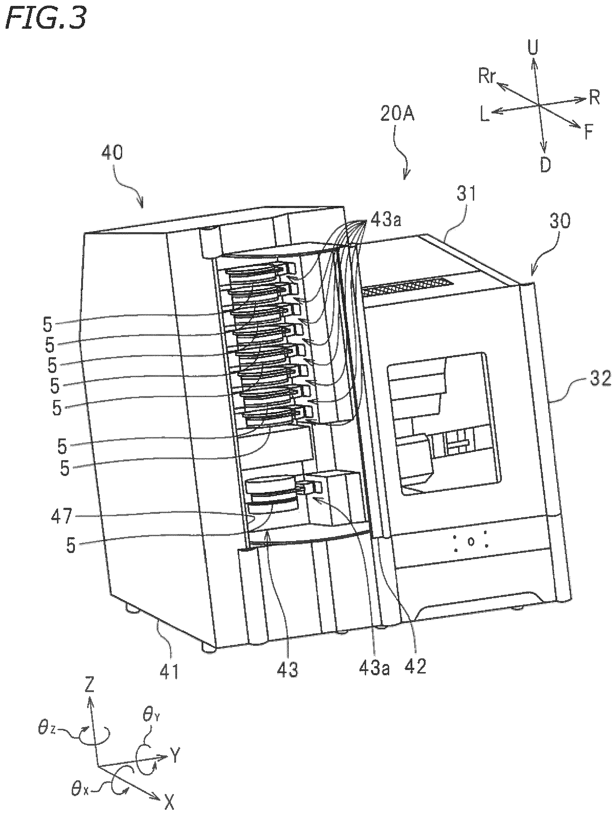

FIG. 3 is a perspective view of a first cutting apparatus.

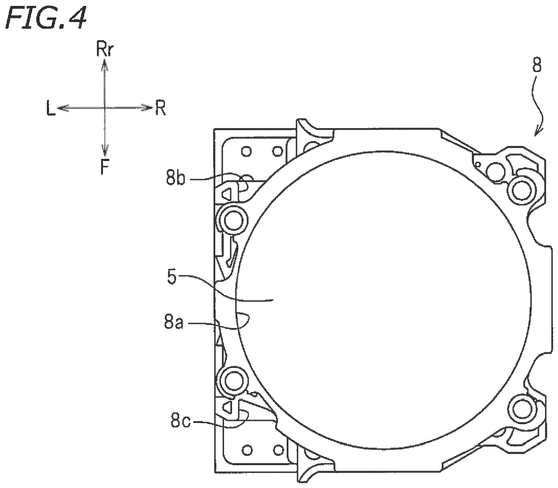

FIG. 4 is a plan view of a workpiece and an adapter.

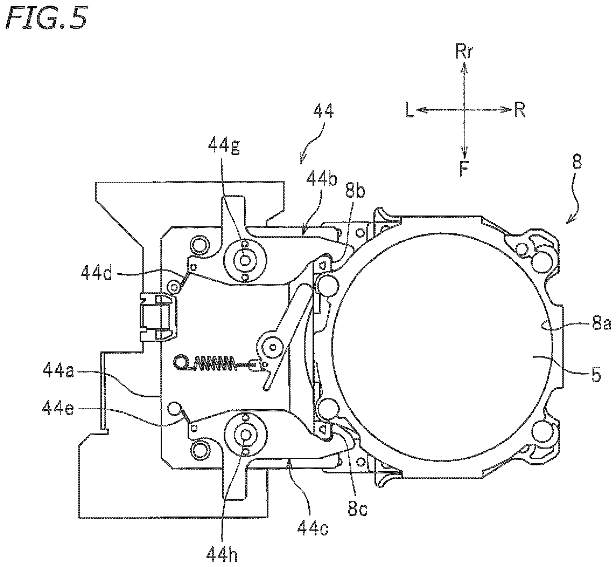

FIG. 5 is a plan view of a conveyor.

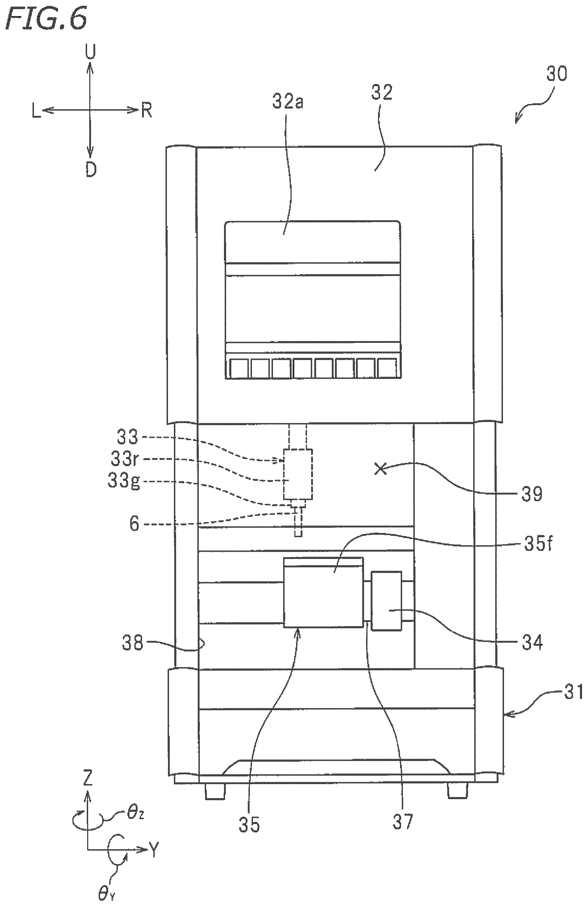

FIG. 6 is a front view of a machining device.

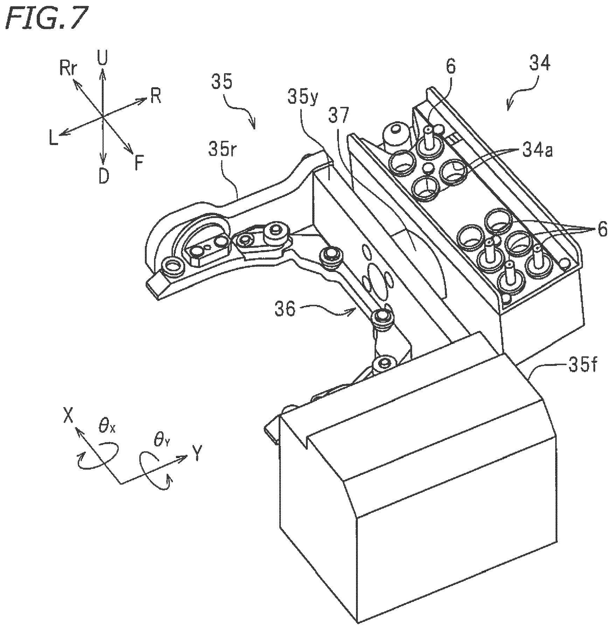

FIG. 7 is a perspective view of a tool magazine, a rotational support, and a clamp.

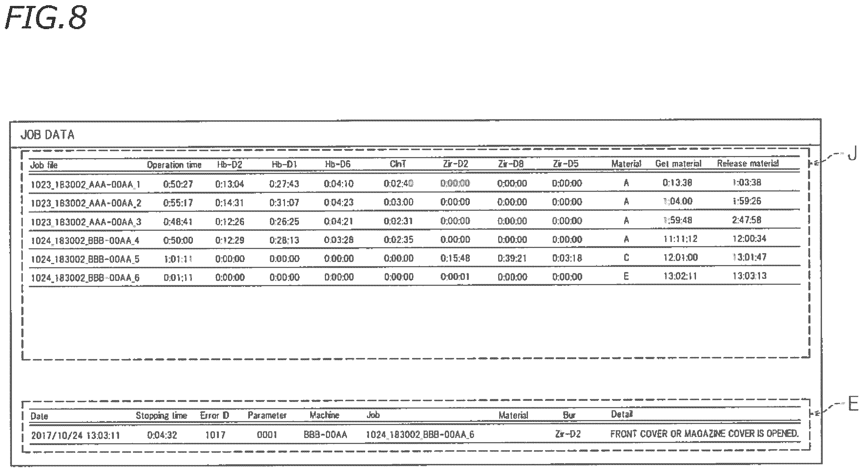

FIG. 8 illustrates an exemplary operating condition log.

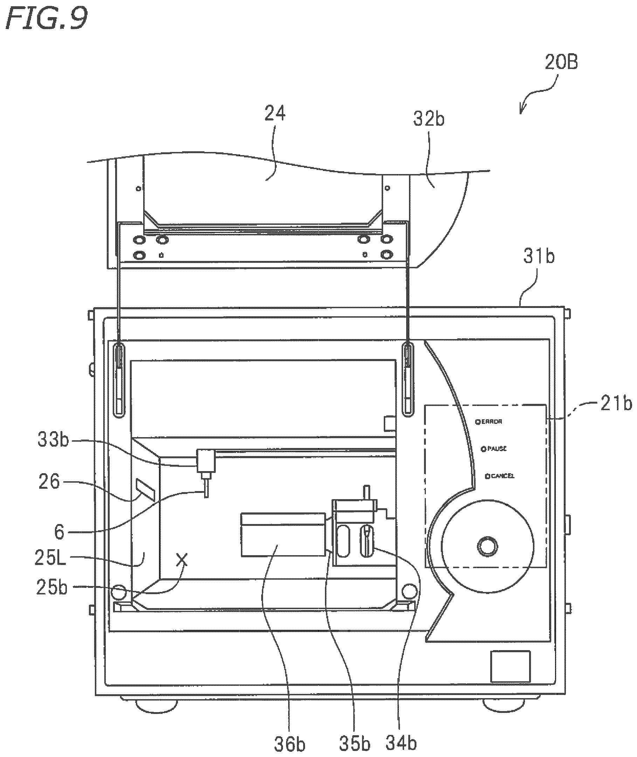

FIG. 9 is a front view of a second cutting apparatus.

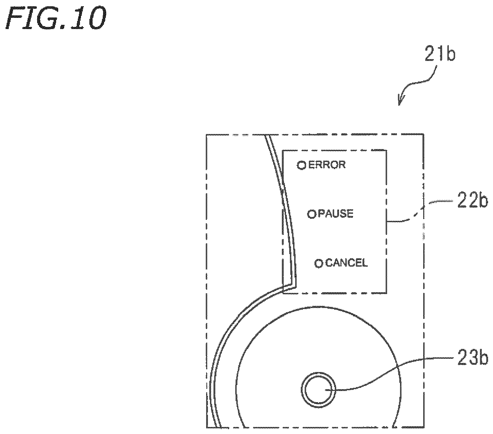

FIG. 10 is an enlarged view of main components of a front panel of the second cutting apparatus.

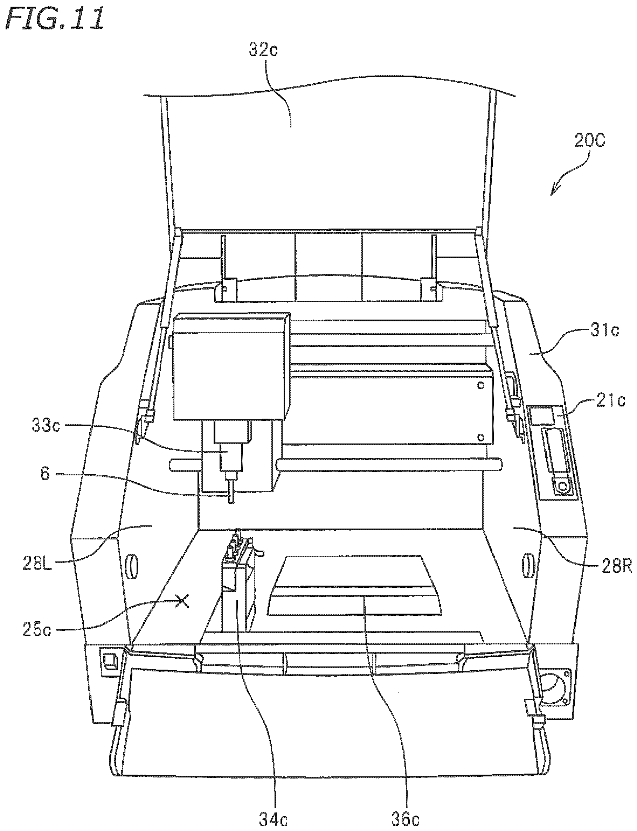

FIG. 11 is a front view of a third cutting apparatus.

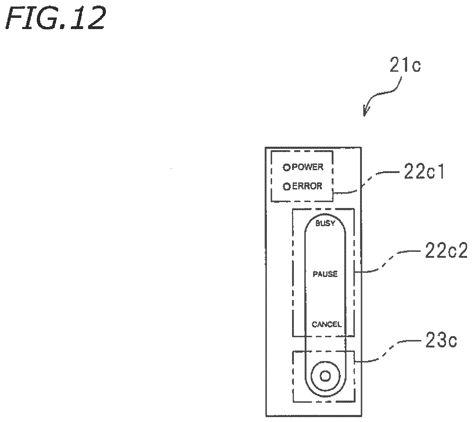

FIG. 12 is an enlarged view of main components of a front panel of the third cutting apparatus.

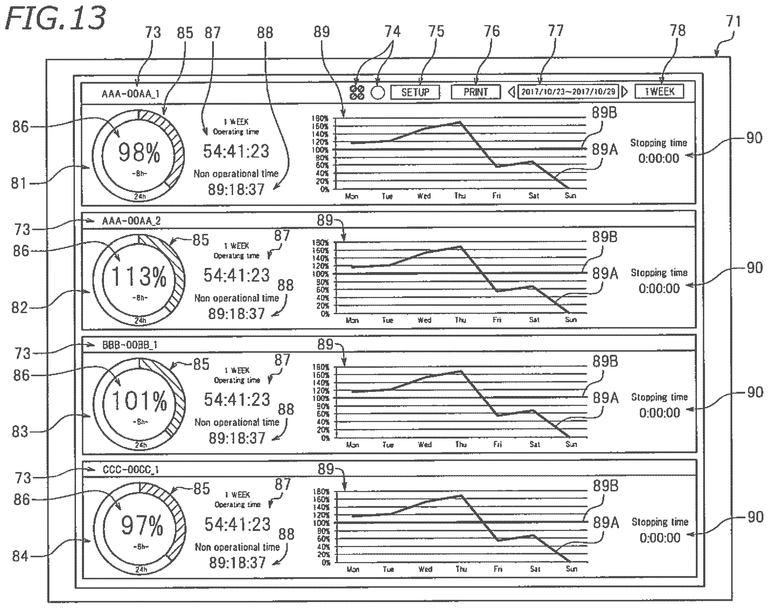

FIG. 13 illustrates an exemplary first display screen.

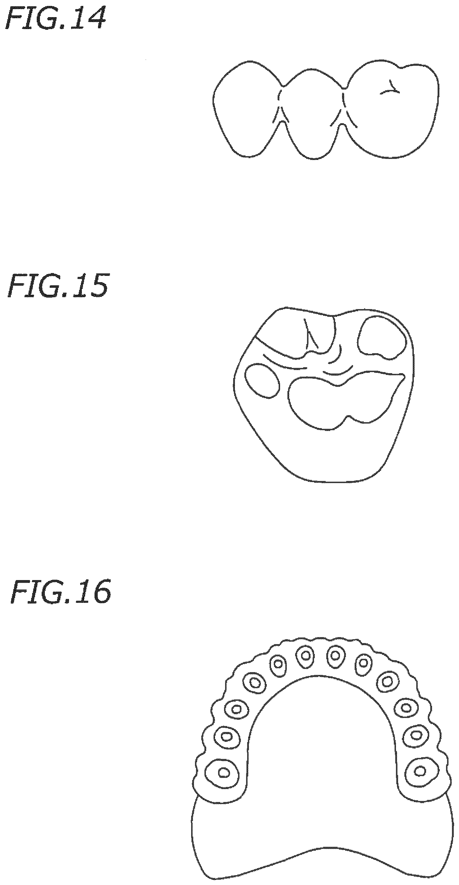

FIG. 14 illustrates an exemplary dental product (which is a bridge).
FIG. 15 illustrates another exemplary dental product (which is an artificial tooth).
FIG. 16 illustrates still another exemplary dental product (which is a denture base).

### DETAILED DESCRIPTION OF THE PREFERRED EMBODIMENTS

Embodiments of the present invention will be described below with reference to the drawings. The embodiments described below are naturally not intended to limit the present invention in any way. Components or elements having the same functions are identified by the same reference signs, and description thereof will be simplified or omitted when deemed redundant.

FIG. 1 is a schematic diagram illustrating an operating condition management system 10. FIG. 2 is a functional block diagram of the operating condition management system 10. The operating condition management system 10 may hereinafter be abbreviated as a "management system 10". The management system 10 illustrated in FIG. 1 includes a server 12, a network 14, a first cutting system 16A, a second cutting system 16B, a third cutting system 16C, a management terminal 18A, and a management terminal 18B. The first cutting system 16A includes first cutting apparatuses 20A and a first operation terminal 50A. The second cutting system 16B includes a second cutting apparatus 20B and a second operation terminal 50B. The third cutting system 16C includes a third cutting apparatus 20C and a third operation terminal 50C. In the present embodiment, the first cutting apparatuses 20A, the second cutting apparatus 20B, and the third cutting apparatus 20C are of different models,

The management system 10 is able to determine not only the operating conditions of the first cutting apparatuses 20A but also the operating conditions of the second and third cutting apparatuses 20B and 20C so as to present the operating conditions on the management terminals 18A and 18B. Some or all of the server 12, the first to third cutting systems 16A to 16C, and the management terminals 18A and 18B may be installed at different business establishments, in different buildings, or in different rooms. The number of servers 12, the number of first cutting systems 16A, the number of second cutting systems 16B, the number of third cutting systems 16C, the number of management terminals 18A, and the number of management terminals 18B illustrated in FIG. 1 are only illustrative. The management system 10 may include any number of servers 12, any number of first cutting systems 16A, any number of second cutting systems 16B, any number of third cutting systems 16C, any number of management terminals 18A, and any number of management terminals 18B.

The server 12 is a host computer of the management system 10. The server 12 is connected to the first to third operation terminals 50A to 50C through the network 14 so as to enable mutual communication between the server 12 and the first to third operation terminals 50A to 50C. The server 12 is connected to the management terminals 18A and 18B through the network 14 so as to enable mutual communication between the server 12 and the management terminals 18A and 18B. The network 14 may establish wired connections or wireless connections. The network 14 is, for example, the Internet or a local area network (LAN). As illustrated in FIG. 2, the server 12 includes a mass memory 13 to store information.

The first to third cutting systems 16A to 16C are installed, for example, in a dental laboratory. The first to third cutting systems 16A to 16C may be installed at different business establishments, in different buildings, or in different rooms. The following description discusses the first cutting system 16A, the second cutting system 16B, and the third cutting system 16C in this order. Description of the second and third cutting systems 16B and 16C omits features similar to those of the first cutting system 16A and thus focuses on features different from those of the first cutting system 16A.

First, the first cutting system 16A will be described. As illustrated in FIG. 1, the first cutting system 16A includes two first cutting apparatuses 20A and one first operation terminal 50A. In the present embodiment, the two first cutting apparatuses 20A are similar in structure and configuration. The two first cutting apparatuses 20A are each connected to the first operation terminal 50A through a line L. In the present embodiment, the line L establishes wired connections. Alternatively, the line L may establish wireless connections. Although the two first cutting apparatuses 20A are connected to the first operation terminal 50A in the present embodiment, any other number of first cutting apparatuses 20A may be connected to the first operation terminal 50A. The number of first cutting apparatuses 20A may be, for example, one, three, or four.

FIG. 3 is a perspective view of the first cutting apparatus 20A. In the following description, the terms "right", "left", "up", and "down" respectively refer to right, left, up, and down with respect to an operator (or user) facing the front of the first cutting apparatus 20A. The term "forward" refers to a direction away from the rear of the first cutting apparatus 20A and toward the operator. The term "rearward" refers to a direction away from the operator and toward the rear of the first cutting apparatus 20A. The reference signs F, Rr, R, L, U, and D in the drawings respectively represent front, rear, right, left, up, and down. Assuming that an X axis, a Y axis, and a Z axis are perpendicular or substantially perpendicular to each other, each first cutting apparatus 20A is disposed on a plane defined by the X axis and the Y axis. In the present embodiment, the X axis extends in a front-rear direction. The Y axis extends in a right-left direction. The Z axis extends in an up-down direction. The reference sign θ_{X} represents a rotational direction around the X axis. The reference sign θ_{Y} represents a rotational direction around the Y axis. The reference sign θ_{Z} represents a rotational direction around the Z axis. These directions are defined merely for the sake of convenience of description and do not limit in any way how each first cutting apparatus 20A may be installed.

Each first cutting apparatus 20A machines a workpiece 5. Specifically, each first cutting apparatus 20A machines the workpiece 5 so as to fabricate a dental product. Examples of the dental product to be fabricated by each first cutting apparatus 20A include: dental prosthetics, such as a crown, a bridge, a coping, an inlay, an onlay, a veneer, and a custom abutment; an artificial tooth; and a denture base.

FIG. 4 is a plan view of the workpiece 5 and an adapter (or holder) 8. Examples of material(s) for the workpiece 5 include: resin materials, such as polymethyl methacrylate (PMMA) resin, polyether ether ketone (PEEK) resin, glass-reinforced resin, and hybrid resin; ceramic materials, such as glass ceramic and zirconia; metallic materials, such as cobalt-chrome sintered metal; wax; and gypsum. When zirconia is selected as a material for the workpiece 5, semi-sintered zirconia, for example, is used. In the present embodiment, the workpiece 5 has a disk shape. The workpiece 5, however, may have any other suitable shape. The workpiece 5 may have, for example, a block shape (such as a cubic or cuboid shape). The workpiece 5 is inserted into an insertion hole 8a defined in a central portion of the adapter 8 and is thus attached to the adapter 8. The workpiece 5 attached to the adapter 8 is held and machined in the first cutting apparatus 20A.

As illustrated in FIG. 3, each first cutting apparatus 20A includes a machining device 30 and a conveying device 40. The conveying device 40 functions as an auto workpiece changer that is able to automatically replace the workpiece 5. The first cutting apparatus 20A further includes an auto tool changer that is able to automatically replace a machining tool 6 (see FIG. 6). Each first cutting apparatus 20A includes an interface with an operating condition recorder 55A of the first operation terminal 50A (which will be described below).

The conveying device 40 is configured to house a plurality of the workpieces 5 therein. The conveying device 40 selects one of the workpieces 5 housed therein and conveys the selected workpiece 5 to the machining device 30. The conveying device 40 includes a case body 41, a door 42, a container 43, and a conveyor 44 (see FIG. 5). FIG. 3 illustrates the first cutting apparatus 20A, with the door 42 of the conveying device 40 opened.

The case body 41 has a box shape. An internal space is defined in the case body 41. The container 43 is housed in the internal space of the case body 41. An opening 47 is defined in the front portion of the case body 41. The door 42 is able to open and close the opening 47 defined in the front portion of the case body 41. The door 42 is supported by the case body 41 such that the door 42 is rotatable around its right end. The container 43 is attached to an inner wall of the door 42. The container 43 has a box shape elongated in the up-down direction. An internal space is defined in the container 43. The container 43 includes a plurality of holders 43a arranged in the up-down direction. The holders 43a each hold the workpiece 5 attached to the adapter 8 (see FIG. 4). In the present embodiment, the number of holders 43a included in the container 43 is nine, such that the number of workpieces 5 holdable in the container 43 is nine. The locations and number of holders 43a are illustrated by way of example only. The holders 43a may be located at any suitable locations. The container 43 may include any other suitable number of holders 43a. In an alternative example, the holders 43a may be arranged in the right-left direction.

FIG. 5 is a plan view of the conveyor 44. FIG. 5 illustrates the conveyor 44 gripping the workpiece 5. Although not illustrated, the conveyor 44 is disposed in the internal space of the case body 41. The conveyor 44 is controlled by a motor (not illustrated) such that the conveyor 44 is movable inside the case body 41 of the conveying device 40 and inside a case body 31 of the machining device 30 (which will be described below). The conveyor 44 is able to place each workpiece 5 in the associated holder 43a of the container 43 and remove each workpiece 5 from the associated holder 43a of the container 43. The conveyor 44 removes the workpiece 5 from the container 43 and conveys the workpiece 5 to the machining device 30. The conveyor 44 attaches the workpiece 5 (which has been removed from the container 43) to a clamp 36 (which will be described below). The conveyor 44 detaches the workpiece 5 from the clamp 36 and conveys the workpiece 5 to the conveying device 40. The conveyor 44 then places the workpiece 5 (which has been detached from the clamp 36) in the container 43.

The conveyor 44 includes a body 44a, a first hook 44b, a second hook 44c, a first spring 44d, and a second spring 44e. The body 44a is a plate. The first and second hooks 44b and 44c are disposed to face each other in the front-rear direction. The adapter 8 is caught between the first and second hooks 44b and 44c in the front-rear direction. The first hook 44b is supported by a first shaft 44g provided on the body 44a, such that the first hook 44b is rotatable around the first shaft 44g. An extremity of the first hook 44b is in engagement with a first engagement protrusion 8b of the adapter 8. The second hook 44c is supported by a second shaft 44h provided on the body 44a, such that the second hook 44c is rotatable around the second shaft 44h. An extremity of the second hook 44c is in engagement with a second engagement protrusion 8c of the adapter 8. The first spring 44d provides an elastic force to the first hook 44b. Specifically, the first spring 44d provides an elastic force that causes the extremity of the first hook 44b to move toward the second hook 44c. The second spring 44e provides an elastic force to the second hook 44c. Specifically, the second spring 44e provides an elastic force that causes the extremity of the second hook 44c to move toward the first hook 44b.

FIG. 6 is a front view of the machining device 30. The machining device 30 machines the workpiece 5 conveyed from the conveying device 40. The machining device 30 includes the case body 31, a cover 32, a spindle 33, a tool magazine 34 (see also FIG. 7), a rotational support 35 (see also FIG. 7), and the clamp 36 (see FIG. 7). FIG. 6 illustrates the machining device 30, with the cover 32 opened. The case body 31 has a box shape. An internal machining space 39 is defined in the case body 31. A portion of the internal machining space 39 of the case body 31 is in communication with the internal space of the case body 41. An opening 38 is defined in the front portion of the case body 31. The cover 32 is able to open and close the opening 38. The cover 32 is supported by the case body 31 such that the cover 32 is slidable upward and downward. The cover 32 is provided with a window 32a. With the cover 32 closed, the machining space 39 is visually recognizable through the window 32a.

The spindle 33 supports the machining tool 6 such that the machining tool 6 is rotatable. The machining tool 6 may also be referred to as a milling bar. The spindle 33 machines the workpiece 5 by bringing the machining tool 6 into contact with the workpiece 5 while rotating the machining tool 6. The machining tool 6 may be a tool to cut the workpiece 5 or a tool to grind the workpiece 5. The spindle 33 includes a gripper 33g and a rotator 33r. The gripper 33g supports (or grips) the upper end of the machining tool 6. The gripper 33g is, for example, a collet chuck. The rotator 33r rotates the machining tool 6 gripped by the gripper 33g. The rotator 33r is connected with a motor (not illustrated). Driving this motor causes the rotator 33r to rotate in the rotational direction θ_{Z} around the Z axis. The rotation of the rotator 33r rotates the machining tool 6, gripped by the gripper 33g, in the rotational direction θ_{Z} around the Z axis. The rotator 33r is moved in the right-left direction and the up-down direction by a first driver (not illustrated). The first driver is a mover to move the machining tool 6 relative to the workpiece 5.

FIG. 7 is a perspective view of the tool magazine 34, the rotational support 35, and the clamp 36. The tool magazine 34 is able to hold a plurality of the machining tools 6. The upper surface of the tool magazine 34 is provided with a plurality of holes 34a in which the machining tools 6 are to be held. Each machining tool 6 is inserted into an associated one of the holes 34a such that the upper portion of each machining tool 6 is exposed. Replacement of the machining tool 6 involves: returning the machining tool 6 gripped by the gripper 33g to the associated hole 34a; moving the spindle 33 to a position over the machining tool 6 to be used next; and causing the gripper 33g to grip the upper end of the machining tool 6 located under the gripper 33g. The tool magazine 34 is provided with a rotation shaft 37. The rotation shaft 37 supports the rotational support 35 such that the rotational support 35 is rotatable. The rotation shaft 37 extends in the right-left direction. The rotation shaft 37 is coupled to the rotational support 35. The tool magazine 34 is provided with a second driver (not illustrated). The second driver rotates the rotation shaft 37 in the rotational direction θ_{Y} around the Y axis. The rotation of the rotation shaft 37 rotates the rotational support 35 in the rotational direction θ_{Y} around the Y axis.

The rotational support 35 supports the clamp 36 such that the clamp 36 is rotatable. The rotational support 35 is substantially U-shaped in a plan view. The rotational support 35 is coupled to the rotation shaft 37. The rotational support 35 includes a first portion 35y, a second portion 35r, and a third portion 35f. The first portion 35y extends in the front-rear direction. The second portion 35r extends leftward from the rear end of the first portion 35y. The third portion 35f extends leftward from the front end of the first portion 35y. The clamp 36 is rotatably supported by the second portion 35r and the third portion 35f. The third portion 35f is provided with a motor (not illustrated) to rotate the clamp 36 in the rotational direction θ_{X} around the X axis. The clamp 36 retains the adapter 8 such that the adapter 8 is detachable from the clamp 36. The clamp 36 is substantially C-shaped in the plan view. The clamp 36 retains the adapter 8 that has the workpiece 5 attached thereto and has been conveyed to the machining device 30 by the conveyor 44. In the present embodiment, the machining device 30 machines the workpiece 5 retained by the clamp 36 through the adapter 8.

As illustrated in FIG. 1, the first operation terminal 50A is electrically connected to each first cutting apparatus 20A. The first operation terminal 50A and each first cutting apparatus 20A are usually disposed in the same room. The first operation terminal 50A is a terminal intended for the operator(s) who operate(s) the first cutting apparatuses 20A. The first operation terminal 50A is typically a computer. The first operation terminal 50A includes, for example, a central processing unit (CPU), a read-only memory (ROM), and a random-access memory (RAM). The ROM stores, for example, a program to be executed by the CPU. In the present embodiment, the first operation terminal 50A is provided outside the first cutting apparatuses 20A. Alternatively, the first operation terminal 50A may be provided inside each first cutting apparatus 20A (e.g., inside the case body 31 of the machining device 30 of each first cutting apparatus 20A). The first operation terminal 50A has the function of keeping an operating condition log of each first cutting apparatus 20A. This function will be referred to as an "operating condition recording function". The first operation terminal 50A exercises control for machining of the workpiece 5 and directly records the operating condition of each first cutting apparatus 20A.

As illustrated in FIG. 2, the first operation terminal 50A includes an input unit 51A, a memory 52A, a cutting controller 53A, a display unit 54A, the operating condition recorder 55A, and an output unit 58A. The functions of the components of the first operation terminal 50A may be implemented by software or hardware. The functions of the components of the first operation terminal 50A may be performed by a single processor or a plurality of processors or may be incorporated into circuit(s).

The input unit 51A receives, for example, job data to be used to machine the workpiece 5 into a dental product. The job data is a cutting program that defines which workpiece 5 is to be cut and a procedure of how to cut the workpiece 5. The job data includes, for example, information on the workpiece 5 to be cut, information on the machining tool 6 to be used, and machining steps (or jobs) that define, using coordinate values, operations of the machining tool 6 and operations of the clamp 36 supporting the workpiece 5. The job data is created by, for example, a computer-aided production device known in the related art. The input unit 51A may include, for example, a keyboard, a touch screen, a mouse, and/or button(s).

The memory 52A stores the job data provided from the input unit 51A. In accordance with the job data, the cutting controller 53A controls the first driver (not illustrated), the second driver (not illustrated), the spindle 33, and the conveyor 44 of each first cutting apparatus 20A. The display unit 54A includes, for example, a display. The display presents, for example, the details of the job data and the operating condition of each first cutting apparatus 20A. The display unit 54A may also function as the input unit 51A. The display unit 54A may be a touch screen directly touchable and operable by the operator.

The operating condition recorder 55A keeps an operating condition log of each first cutting apparatus 20A. For example, upon receiving an instruction from the input unit 51A or upon detecting a change of job to be executed by each first cutting apparatus 20A, the operating condition recorder 55A automatically keeps an operating condition log. The output unit 58A transmits, to the server 12, information on the operating condition of each first cutting apparatus 20A recorded by the operating condition recorder 55A. The output unit 58A transmits the job data to each first cutting apparatus 20A.

FIG. 8 illustrates an exemplary operating condition log. The operating condition log in FIG. 8 is illustrated in the form of job data (represented as "JOB DATA") including a job history J recorded on a job-by-job basis and an error history E recorded for each error that has occurred. The job history J indicates an operating condition for each job executed by the first cutting apparatus 20A during a specified period (e.g., during a specified day). The job history J may include, for example, information such as: job file names (represented as "Job file"); the operating times of the first cutting apparatuses 20A (represented as "Operating time"); the time required for machining for each type of machining tool 6 (represented as "Hb-D2", "Hb-D1", "Hb-D6", "ClnT", "Zir-D2", "Zir-D8", and "Zir-D5"); the type of each workpiece 5 (represented as "Material"); times at which the adapter 8 is received (represented as "Get material"); and times at which the adapter 8 is returned (represented as "Release material"). The error history E indicates information on an error that has occurred in the first cutting apparatus 20A during a specified period (e.g., during a specified day). The error history E may include, for example, information such as: a date and time at which an error has occurred (represented as "Date"); an error occurring time during which the first cutting apparatus 20A is deactivated owing to the error (represented as "Stopping time"); an error identifying symbol (represented as "Error ID"); the file name of a job in which the error has occurred (represented as "Job"); the type of the workpiece 5 (represented as "Material"); the type of the machining tool 6 (represented as "Bur"); and the details of the error (represented as "Detail").

The second cutting system 16B will be described below. As illustrated in FIG. 1, the second cutting system 16B includes one second cutting apparatus 20B and one second operation terminal 50B. The second operation terminal 50B is connected to the second cutting apparatus 20B through a line L. Although the single second cutting apparatus 20B is connected to the second operation terminal 50B in the present embodiment, any other number of second cutting apparatuses 20B may be connected to the second operation terminal 50B. The number of second cutting apparatuses 20B may be two or more (e.g., two, three, or four).

FIG. 9 is a front view of the second cutting apparatus 20B. The second cutting apparatus 20B is of an old model. The second cutting apparatus 20B includes a case body 31b, a cover 32b, a spindle 33b, a tool magazine 34b, a clamp 36b, a rotational support 35b, a front panel 21b, and a light-emitting diode (LED) lamp 26. The cover 32b is attached to the case body 31b. The spindle 33b retains the machining tool 6. The tool magazine 34b holds the machining tools 6. The clamp 36b retains the workpiece 5. The rotational support 35b supports the clamp 36b such that the clamp 36b is rotatable. An internal machining space 25b is defined in the case body 31b. FIG. 9 illustrates the second cutting apparatus 20B, with the cover 32b opened.

The second cutting apparatus 20B is similar in structure and configuration to the first cutting apparatuses 20A other than the features described below. Unlike the first cutting apparatuses 20A, the second cutting apparatus 20B includes no conveying device that functions as an auto workpiece changer. Unlike the first cutting apparatuses 20A, the second cutting apparatus 20B includes no interface with an operating condition recorder. The second cutting apparatus 20B has the function of visually presenting the current state (or status) of the second cutting apparatus 20B on the front panel 21b.

FIG. 10 is an enlarged view of main components of the front panel 21b. The front panel 21b is provided with a display unit 22b and an input unit 23b. The display unit 22b is provided with an "ERROR" indicator lamp, a "PAUSE" indicator lamp, and a "CANCEL" indicator lamp. The input unit 23b is an operation button that also serves as an indicator lamp. The indicator lamps incorporated into the display unit 22b and the input unit 23b are each able to light up, go out, and blink. In one example, the states of the indicator lamps in the display unit 22b and the input unit 23b change in accordance with the status of the second cutting apparatus 20B as illustrated in Table 1 below.

**Table 1: STATUS OF SECOND CUTTING APPARATUS AND STATES OF INDICATOR LAMPS**

| | |
|---|---|
| STATUS OF SECOND CUTTING APPARATUS 20B | STATES OF LAMPS IN DISPLAY UNIT 22b AND INPUT UNIT 23b |
| POWER OFF | LAMP OF INPUT UNIT 23b GOES OUT |
| POWER ON AND STANDBY | LAMP OF INPUT UNIT 23b LIGHTS UP |
| DURING MACHINING OPERATION | LAMP OF INPUT UNIT 23b BLINKS |
| DURING ERROR OCCURRENCE | "ERROR" LAMP OF DISPLAY UNIT 22b BLINKS |
| DURING SUSPENSION | "PAUSE" LAMP OF DISPLAY UNIT 22b LIGHTS UP |
| DURING DATA CANCELLATION | "CANCEL" LAMP OF DISPLAY UNIT 22b BLINKS |

The cover 32b is provided with a window 24. With the cover 32b closed, the machining space 25b is visually recognizable through the window 24. The LED lamp 26 is attached to one of wall surfaces of the case body 31b that define the machining space 25b (e.g., a left wall 25L of the case body 31b in FIG. 9). The LED lamp 26 is able to light up, go out, and blink. The LED lamp 26 is configured to emit light of a plurality of colors (e.g., white, blue, yellow, and red). The LED lamp 26 visually indicates the status of the second cutting apparatus 20B. In one example, the color of the LED lamp 26 changes in accordance with the status of the second cutting apparatus 20B as illustrated in Table 2 below.

**Table 2: STATUS OF SECOND CUTTING APPARATUS AND COLOR OF LED LAMP**

| STATUS OF SECOND CUTTING APPARATUS 20B | COLOR OF LED LAMP 26 |
|---|---|
| POWER OFF | LAMP 26 GOES OUT |
| POWER ON AND STANDBY | LAMP 26 LIGHTS UP AND EMITS BLUE LIGHT |
| DURING MACHINING OPERATION | LAMP 26 LIGHTS UP AND EMITS WHITE LIGHT |
| SUSPENSION DURING ERROR OCCURRENCE | LAMP 26 LIGHTS UP AND EMITS YELLOW LIGHT |
| MACHINING STOP DURING ERROR OCCURRENCE | LAMP 26 LIGHTS UP AND EMITS RED LIGHT |

As illustrated in FIG. 1, the second operation terminal 50B is electrically connected to the second cutting apparatus 20B. The second operation terminal 50B and the second cutting apparatus 20B are usually disposed in the same room. The second operation terminal 50B is a terminal intended for the operator who operates the second cutting apparatus 20B. The second operation terminal 50B is typically a computer. The second operation terminal 50B includes, for example, a central processing unit (CPU), a ROM, and a RAM. The ROM stores, for example, a program to be executed by the CPU. In the present embodiment, the second operation terminal 50B is provided outside the second cutting apparatus 20B. Alternatively, the second operation terminal 50B may be provided inside the second cutting apparatus 20B. Unlike the first operation terminal 50A, the second operation terminal 50B has no operating condition recording function. The second operation terminal 50B has, instead of the operating condition recording function, the function of non-continuously keeping a status log of the second cutting apparatus 20B. This function will be referred to as a "status recording function". The status log is exemplary status discriminating information.

As illustrated in FIG. 2, the second operation terminal 50B includes an input unit 51B, a memory 52B, a cutting controller 53B, a display unit 54B, an information acquirer 56B, an information processor 57B, and an output unit 58B. The input unit 51B, the memory 52B, the cutting controller 53B, and the display unit 54B of the second operation terminal 50B may respectively be similar to the input unit 51A, the memory 52A, the cutting controller 53A, and the display unit 54A of the first operation terminal 50A.

The information acquirer 56B acquires, for example, at a predetermined time, status discriminating information indicative of the state of the second cutting apparatus 20B. The status discriminating information is acquired so as to change, for example, the states of the indicator lamps of the display unit 22b and the input unit 23b and the color of the LED lamp 26. The status discriminating information indicates, for example, which state the second cutting apparatus 20B is in. The states of the second cutting apparatus 20B include a machining-stopped state, a machining-in-progress state, and an error occurring state. The machining-stopped state may include a power OFF state, a power ON and standby state, a suspended state, and a data cancellation state. When the power of the second cutting apparatus 20B is turned ON, the information acquirer 56B acquires the status discriminating information on a regular basis. The information acquirer 56B typically acquires the status discriminating information at predetermined time intervals. For example, upon receiving an instruction from the input unit 51B or upon detecting a change of job to be executed by the second cutting apparatus 20B, the information acquirer 56B may acquire the status discriminating information. The information acquirer 56B transmits the acquired status discriminating information to the information processor 57B (which will be described below). The information processor 57B determines information on the operating condition of the second cutting apparatus 20B in accordance with the status discriminating information.

The information processor 57B combines pieces of the status discriminating information, acquired by the information acquirer 56B, so as to convert the pieces of status discriminating information into operating condition information. The operating condition information generated by the information processor 57B includes, for example, information equivalent to at least one of pieces of the information collected by the operating condition recorder 55A of the first operation terminal 50A. The information processor 57B calculates, for example, the operating time of the second cutting apparatus 20B (represented as "Operation time" in FIG. 8) and/or an error occurring time (represented as "Stopping time" in FIG. 8). The information processor 57B, however, may perform any other calculations. In one example, the information processor 57B calculates an error occurring time that is a time during which an "error occurring" status is recorded. In another example, the information processor 57B calculates an operating time that is a time during which a "machining-in-progress" status is recorded. In still another example, the information processor 57B first calculates a total operating time that is a time during which a "machining-in-progress" status is recorded, and then subtracts an error occurring time from the total operating time so as to calculate an actual operating time. The output unit 58B transmits the information on the operating condition of the second cutting apparatus 20B to the server 12.

The third cutting system 16C will be described below. As illustrated in FIG. 1, the third cutting system 16C includes one third cutting apparatus 20C, one image capturing device 27, and one third operation terminal 50C. The third operation terminal 50C is connected to each of the third cutting apparatus 20C and the image capturing device 27 through a line L. Although the single third cutting apparatus 20C and the single image capturing device 27 are connected to the third operation terminal 50C in the present embodiment, any other number of third cutting apparatuses 20C and any other number of image capturing devices 27 may be connected to the third operation terminal 50C. The number of third cutting apparatuses 20C may be two or more (e.g., two, three, or four). The number of image capturing devices 27 may be two or more (e.g., two, three, or four). When the third cutting system 16C includes a plurality of the image capturing devices 27, the image capturing devices 27 may be disposed such that the image capturing devices 27 are able to capture images of the third cutting apparatus(es) 20C at different angles.

FIG. 11 is a front view of the third cutting apparatus 20C. The third cutting apparatus 20C is of an old model. The third cutting apparatus 20C includes a case body 31c, a cover 32c, a spindle 33c, a tool magazine 34c, a clamp 36c, and a front panel 21c. The cover 32c is attached to the case body 31c. The spindle 33c grips the machining tool 6. The tool magazine 34c holds the machining tools 6. The clamp 36c retains the workpiece 5. An internal machining space 25c is defined in the case body 31c. During standby, the spindle 33c is located at a predetermined standby position. The standby position is located adjacent to a left wall 28L of the case body 31c in FIG. 11. FIG. 11 illustrates the third cutting apparatus 20C, with the cover 32c opened.

The third cutting apparatus 20C is similar in structure and configuration to the first cutting apparatuses 20A other than the features described below. Unlike the first cutting apparatuses 20A, the third cutting apparatus 20C includes no conveying device that functions as an auto workpiece changer. Unlike the first cutting apparatuses 20A, the third cutting apparatus 20C includes no interface with an operating condition recorder. The third cutting apparatus 20C has the function of visually presenting the current state (or status) of the third cutting apparatus 20C on the front panel 21c.

FIG. 12 is an enlarged view of main components of the front panel 21c. The front panel 21c is provided with a first display unit 22c1, a second display unit 22c2, and an input unit 23c. The first display unit 22c1 is provided with a "POWER" indicator lamp and an "ERROR" indicator lamp. The second display unit 22c2 is provided with a "BUSY" indicator lamp, a "PAUSE" indicator lamp, and a "CANCEL" indicator lamp. The indicator lamps incorporated into the first and second display units 22c1 and 22c2 are each able to light up, go out, and blink. In one example, the states of the indicator lamps in the first and second display units 22c1 and 22c2 change in accordance with the status of the third cutting apparatus 20C as illustrated in Table 3 below.

**Table 3: STATUS OF THIRD CUTTING APPARATUS AND STATES OF INDICATOR LAMPS**

| | |
|---|---|
| STATUS OF THIRD CUTTING APPARATUS 20C | STATES OF LAMPS IN FIRST AND SEC-OND DISPLAY UNITS 22c1 AND 22c2 |
| POWER OFF | "POWER" LAMP OF FIRST DISPLAY UNIT 22c1 GOES OUT |
| POWER ON AND STANDBY | "POWER" LAMP OF FIRST DISPLAY UNIT 22c1 LIGHTS UP |
| DURING ERROR OCCURRENCE | "ERROR" LAMP OF FIRST DISPLAY UNIT 22c1 BLINKS |
| DURING MACHINING OPERATION | "BUSY" LAMP OF SECOND DISPLAY UNIT 22c2 LIGHTS UP |
| DURING SUSPENSION | "PAUSE" LAMP OF SECOND DISPLAY UNIT 22c2 LIGHTS UP |
| DURING DATA CANCELLATION | "CANCEL" LAMP OF SECOND DISPLAY UNIT 22c2 BLINKS |

The image capturing device 27 acquires image data to check the status of the third cutting apparatus 20C. The image capturing device 27 makes fixed-point observations of a predetermined portion of the third cutting apparatus 20C. The image capturing device 27 may be installed at any position that allows the image capturing device 27 to check the status of the third cutting apparatus 20C. The image capturing device 27 may be directly or indirectly attached to the third cutting apparatus 20C. The image capturing device 27 may be independent of the third cutting apparatus 20C and attached to, for example, a stand disposed in front of the third cutting apparatus 20C. The image capturing device 27 may be attached to an external portion of the case body 31c or may be attached to an internal portion of the case body 31c. The image capturing device 27 may be disposed, for example, in the machining space 25c. The image capturing device 27 is not limited to any particular type of image capturing device. The image capturing device 27 is, for example, a camera. The image capturing device 27 may be able to capture still images and/or moving images. The image capturing device 27 is electrically connected to the third operation terminal 50C. The image capturing device 27 starts capturing images upon receiving an image capturing signal from the third operation terminal 50C.

In one example, the image capturing device 27 may be attached to, for example, the front panel 21c such that the image capturing device 27 is able to capture images of the first and second display units 22c1 and 22c2 of the front panel 21c. In another example, the image capturing device 27 may be attached to, for example, the left wall 28L or right wall 28R of the case body 31c in FIG. 11 such that the image capturing device 27 is able to capture images of how the workpiece 5 is machined (e.g., operations of the spindle 33c and/or the machining tool 6). When the image capturing device 27 is disposed in the machining space 25c, the image capturing device 27 is preferably disposed in the upper portion of the machining space 25c so as to prevent shavings or cuttings (which result from machining of the workpiece 5) from being adhering to the image capturing device 27.

As illustrated in FIG. 1, the third operation terminal 50C is electrically connected to the third cutting apparatus 20C and the image capturing device 27. The third operation terminal 50C and the third cutting apparatus 20C are usually disposed in the same room. The third operation terminal 50C is a terminal intended for the operator who operates the third cutting apparatus 20C. The third operation terminal 50C is typically a computer. The third operation terminal 50C includes, for example, a central processing unit (CPU), a ROM, and a RAM. The ROM stores, for example, a program to be executed by the CPU. In the present embodiment, the third operation terminal 50C is provided outside the third cutting apparatus 20C. Alternatively, the third operation terminal 50C may be provided inside the third cutting apparatus 20C. Unlike the first operation terminal 50A, the third operation terminal 50C includes no operating condition recording function.

As illustrated in FIG. 2, the third operation terminal 50C includes an input unit 51C, a memory 52C, a cutting controller 53C, a display unit 54C, an information acquirer 56C, an information processor 57C, and an output unit 58C. The information processor 57C includes a determiner 57C1 and a calculator 57C2. The input unit 51C, the cutting controller 53C, and the display unit 54C of the third operation terminal 50C may respectively be similar to the input unit 51A, the cutting controller 53A, and the display unit 54A of the first operation terminal 50A.

The memory 52C preliminarily stores status determining data in addition to the job data described above. The status determining data establishes associations between information on the statuses of the third cutting apparatus 20C (e.g., a machining-stopped status, a machining-in-progress status, and an error occurring status) and image data indicative of the statuses of the third cutting apparatus 20C. In one example, the image capturing device 27 is disposed such that the image capturing device 27 is able to capture images of the first and second display units 22c1 and 22c2 (see FIG. 12). The memory 52C stores first status determining data illustrated in Table 4 below. The first status determining data illustrated in Table 4 establishes associations between the statuses of the third cutting apparatus 20C and the image data on a one-on-one basis.

**Table 4: FIRST STATUS DETERMINING DATA**

| STATUS OF THIRD CUTTING APPARATUS 20C | IMAGE DATA |
|---|---|
| POWER OFF | "POWER" LAMP GOES OUT |
| POWER ON AND STANDBY | "POWER" LAMP LIGHTS UP, AND "BUSY" AND "ERROR" LAMPS GO OUT |
| DURING MACHINING OPERATION | "BUSY" LAMP BLINKS |
| DURING ERROR OCCURRENCE | "ERROR" LAMP BLINKS |

In another example, the image capturing device 27 is disposed such that the image capturing device 27 is able to capture images of operations of the spindle 33c (see FIG. 11). The memory 52C stores second status determining data illustrated in Table 5 below. The second status determining data illustrated in Table 5 establishes associations between the statuses of the third cutting apparatus 20C and image data. In still another example, the image capturing device 27 is disposed such that the image capturing device 27 is able to capture images of the first and second display units 22c1 and 22c2 (see FIG. 12) and operations of the spindle 33c (see FIG. 11). The memory 52C stores the second status determining data in addition to the first status determining data.

**Table 5: SECOND STATUS DETERMINING DATA**

| STATUS OF THIRD CUTTING APPARATUS 20C | IMAGE DATA |
|---|---|
| POWER ON AND STANDBY | SPINDLE 33c IS LOCATED AT STANDBY POSITION AND NOT GRIPPING MACHINING TOOL 6 |
| DURING MACHINING OPERATION | SPINDLE 33c IS GRIPPING MACHINING TOOL 6 AND IN OPERATION |
| DURING ERROR OCCURRENCE | SPINDLE 33c IS LOCATED AT POSITION OTHER THAN STANDBY POSITION AND STOPPED, OR SPINDLE 33C IS GRIPPING MACHINING TOOL 6 AND STOPPED |

The information acquirer 56C controls the image capturing device 27 so as to acquire image data of the third cutting apparatus 20C. The image data is exemplary status discriminating information. The information acquirer 56C may acquire continuous image data and/or non-continuous image data. The information acquirer 56C may acquire non-continuous image data, for example, at predetermined time intervals. For example, upon receiving an instruction from the input unit 51C or upon detecting a change of job to be executed by the third cutting apparatus 20C, the information acquirer 56C acquires the image data (i.e., the status discriminating information). The information acquirer 56C transmits the acquired image data to the determiner 57C1 and the calculator 57C2 (which will be described below). The calculator 57C2 determines information on the operating condition of the third cutting apparatus 20C in accordance with the image data.

The determiner 57C1 makes comparisons between the image data acquired by the information acquirer 56C and the status determining data stored in the memory 52C. The determiner 57C1 thus performs pattern matching. The determiner 57C1 selects the highest matching image from the status determining data so as to determine the status of the third cutting apparatus 20C. When the memory 52C stores different pieces of status determining data (e.g., the first and second status determining data mentioned above), the determiner 57C1 may perform pattern matching for each piece of the status determining data so as to determine the status of the third cutting apparatus 20C. Performing different types of pattern matching further increases the accuracy of determining the status of the third cutting apparatus 20C. The results of the different types of pattern matching will usually be the same. Depending on, for example, how lighting is applied or comings and goings of people, however, some pieces of image data might be unclear, so that the result of one of the types of pattern matching might be ambiguous. Thus, when the results of the different types of pattern matching differ from each other, higher priority may be given to the higher matching result. This makes it possible to more reliably determine the status of the third cutting apparatus 20C.

The calculator 57C2 combines pieces of status discriminating information, acquired by the information acquirer 56C, so as to convert the pieces of status discriminating information into operating condition information. The calculator 57C2 may convert the status discriminating information into the operating condition information similarly to the information processor 57B of the second operation terminal 50B. The output unit 58C transmits the information on the operating condition of the third cutting apparatus 20C to the server 12.

The management terminals 18A and 18B will be described below. As illustrated in FIG. 1, each of the management terminals 18A and 18B is an information terminal that generates and presents an operating condition display screen. Each of the management terminals 18A and 18B is a terminal intended for a manager. The management terminals 18A and 18B may be installed in room(s) different from the room(s) in which the first to third cutting systems 16A to 16C are installed. Examples of the room(s) in which the management terminals 18A and 18B are installed include office(s). The management terminals 18A and 18B may be installed in building(s) different from the building(s) in which the first to third cutting systems 16A to 16C are installed. Examples of the building(s) in which the management terminals 18A and 18B are installed include building(s) at remote location(s), such as the home(s) of manager(s). Each of the management terminals 18A and 18B is typically a personal computer. The personal computer may be a general-purpose computer or a dedicated computer on which operating conditions are to be presented. In the present embodiment, the management terminal 18A is a portable terminal. Examples of the portable terminal include a smartphone, a tablet terminal, and a notebook personal computer. In the present embodiment, the management terminal 18B is a desktop personal computer.

As illustrated in FIG. 2, the management terminals 18A and 18B each include an input unit 60, a screen generator 61, and a display unit 62. The functions of the components of each of the management terminals 18A and 18B may be implemented by software or hardware. The functions of the components of each of the management terminals 18A and 18B may be performed by a single processor or a plurality of processors or may be incorporated into circuit(s). The management terminals 18A and 18B may each include a "client server" device. Alternatively, some of the functions of each of the management terminals 18A and 18B may be implemented by so-called "cloud computing".

The input unit 60 receives the information on the operating conditions of the first to third cutting apparatuses 20A to 20C through the server 12. The screen generator 61 generates a first display screen 71 in accordance with the operating condition information provided from the input unit 60 and predetermined generating rules. The first display screen 71 presents the operating conditions of the first to third cutting apparatuses 20A to 20C simultaneously in list form. In one example, the screen generator 61 counts the operating time of each of the first to third cutting apparatuses 20A to 20C on a daily basis, a weekly basis, and a monthly basis. In another example, the screen generator 61 counts the ratio (or percentage) of the operating time of each of the first to third cutting apparatuses 20A to 20C to a predetermined time. The predetermined time may be any time set by a user, such as a manager. In still another example, the screen generator 61 subtracts an operating time from a predetermined time so as to count a non-operating time (e.g., an idle time). In yet another example, the screen generator 61 counts the error occurring time of each of the first to third cutting apparatuses 20A to 20C on a daily basis, a weekly basis, and a monthly basis. The display unit 62 includes, for example, a display. The display unit 62 presents the first display screen 71 on the display.

FIG. 13 illustrates an example of the first display screen 71. The first display screen 71 collectively presents the operating conditions of the first to third cutting apparatuses 20A to 20C. The first display screen 71 includes two icons 74 and buttons 75 to 78. The icons 74 are arranged in the upper central portion of the first display screen 71. The buttons 75 to 78 are arranged in this order from the upper central portion of the first display screen 71 toward the upper right end of the first display screen 71. The icons 74 serve as operation buttons to allow switching between the first display screen 71 and a second display screen. The second display screen presents the operating condition of one of the first to third cutting apparatuses 20A to 20C. The button 75 is an operation button to allow switching to a screen to make various settings for the first to third cutting apparatuses 20A to 20C. The button 76 is an operation button to print the first display screen 71. The button 77 is an operation button to select the date or time period for the operating conditions to be presented. The button 78 is an operation button to allow switching among presentation of weekly operating conditions of the first to third cutting apparatuses 20A to 20C, presentation of monthly operating conditions of the first to third cutting apparatuses 20A to 20C, and presentation of daily operating conditions of the first to third cutting apparatuses 20A to 20C. In FIG. 13, the weekly operating conditions are presented in list form.

The first display screen 71 is provided with a first display region 81, a second display region 82, a third display region 83, and a fourth display region 84. The first display region 81 presents the operating condition of one of the two first cutting apparatuses 20A. The second display region 82 presents the operating condition of the other first cutting apparatus 20A. The third display region 83 presents the operating condition of the second cutting apparatus 20B. The fourth display region 84 presents the operating condition of the third cutting apparatus 20C. In the present embodiment, the first to fourth display regions 81 to 84 are arranged in a vertical direction. The upper left portions of the first to fourth display regions 81 to 84 are provided with sections 73. The sections 73 present the names and identification numbers of the first to third cutting apparatuses 20A to 20C whose operating conditions are presented in the first to fourth display regions 81 to 84. Examples of the names and identification numbers include a model name and a unique ID.

The first to fourth display regions 81 to 84 present the operating conditions of the first to third cutting apparatuses 20A to 20C such that the operating conditions are arranged in similar display formats. Examples of the operating conditions presented in the first to fourth display regions 81 to 84 in list form include circular graphs 85, operating ratios 86, operating times 87 (represented as "Operating time" in FIG. 13), non-operating times 88 (represented as "Non-operating time" in FIG. 13), statistical graphs 89, and error occurring times 90 (represented as "Stopping time" in FIG. 13), Each circular graph 85 and each operating time 87 indicate the sum of weekly operating times of an associated one of the first to third cutting apparatuses 20A to 20C. Each operating ratio 86 is presented inside the associated circular graph 85. Each operating ratio 86 indicates the ratio of the weekly operating time of an associated one of the first to third cutting apparatuses 20A to 20C to a predetermined time. Each non-operating time 88 indicates the sum of non-operating times of an associated one of the first to third cutting apparatuses 20A to 20C with respect to a predetermined time. Each statistical graph 89 is presented rightward of the associated circular graph 85. Each statistical graph 89 includes a line graph 89A and a reference line 89B. Each line graph 89A indicates the ratio of an operating time to a predetermined time on a daily basis (e.g., for each day of the week). In FIG. 13, the horizontal axis of each statistical graph 89 represents days of the week, the vertical axis of each statistical graph 89 represents the ratio of an operating time, and each reference line 89B represents the predetermined time. Each reference line 89B is overlapped with the associated line graph 89A. Each error occurring time 90 indicates the sum of weekly error occurring times of an associated one of the first to third cutting apparatuses 20A to 20C with respect to a predetermined time.

As described above, the management system 10 according to the present embodiment is configured such that not only the first cutting system 16A but also the second and third cutting systems 16B and 16C each having no operating condition recording function are able to determine the operating conditions. This enables manager(s) to collectively check the operating conditions of the first to third cutting apparatuses 20A to 20C, making it possible to make comparisons between the operating conditions of the first to third cutting apparatuses 20A to 20C and use the results of the comparisons for creation of machining plans or overall operation management of a dental laboratory. The management system 10 according to the present embodiment is able to save the time and trouble of compiling the operating conditions and thus enhance convenience of users, such as managers and operators.

The management system 10 according to the present embodiment is configured such that the information acquirer 56B of the second operation terminal 50B acquires status discriminating information that is a log including information indicative of which state the second cutting apparatus 20B is in. The states of the second cutting apparatus 20B include a machining-stopped state, a machining-in-progress state, and an error occurring state. The information processor 57B calculates at least one of a non-operating time, an operating time, and an error occurring time of the second cutting apparatus 20B in accordance with the log. The management system 10 according to the present embodiment is thus able to calculate at least one of the non-operating time, operating time, and error occurring time of the second cutting apparatus 20B without going through the trouble of conducting, for example, extensive wiring work.

The management system 10 according to the present embodiment includes the image capturing device 27 and the memory 52C. The image capturing device 27 is controlled by the third operation terminal 50C. The image capturing device 27 captures, at a fixed point, images of the third cutting apparatus 20C. The memory 52C preliminarily stores status determining data that establishes associations between the states of the third cutting apparatus 20C and image data indicative of the statuses of the third cutting apparatus 20C. The information acquirer 56C acquires the status discriminating information that is images of the third cutting apparatus 20C captured by the image capturing device 27. The information processor 57C includes the determiner 57C1 and the calculator 57C2. The determiner 57C1 determines the status of the third cutting apparatus 20C in accordance with the status determining data stored in the memory 52C. The calculator 57C2 calculates at least one of a non-operating time, an operating time, and an error occurring time of the third cutting apparatus 20C in accordance with the result of the determination made by the determiner 57C1. The management system 10 according to the present embodiment is thus able to calculate at least one of the non-operating time, operating time, and error occurring time of the third cutting apparatus 20C.

The management system 10 according to the present embodiment includes the second and third cutting apparatuses 20B and 20C. The management terminals 18A and 18B each present the operating conditions of the second and third cutting apparatuses 20B and 20C such that the operating conditions are arranged in similar display formats. This enables manager(s) to collectively check, on the management terminals 18A and 18B, the operating conditions of the second and third cutting apparatuses 20B and 20C of different models, and to easily make side-by-side comparisons between the operating conditions of the second and third cutting apparatuses 20B and 20C on the management terminals 18A and 18B.

The management system 10 according to the present embodiment includes the first cutting apparatuses 20A, the first operation terminal 50A, and the operating condition recorder 55A. Each first cutting apparatus 20A machines the workpiece 5. The first operation terminal 50A controls the first cutting apparatuses 20A. The operating condition recorder 55A is communicably connected to the first operation terminal 50A. The operating condition recorder 55A records the operating conditions of the first cutting apparatuses 20A. The management terminals 18A and 18B each present the operating conditions of the first, second, and third cutting apparatuses 20A, 20B, and 20C such that the operating conditions are arranged in similar display formats. This enables manager(s) to collectively check, on the management terminals 18A and 18B, the operating conditions of the first to third cutting apparatuses 20A to 20C, and to easily make side-by-side comparisons between the operating conditions of the first to third cutting apparatuses 20A to 20C on the management terminals 18A and 18B.

The second and third cutting apparatuses 20B and 20C of the management system 10 according to the present embodiment are installed in building(s) different from building(s) in which the management terminals 18A and 18B are installed. This enables manager(s) to check the operating conditions of the second and third cutting apparatuses 20B and 20C from remote location(s), such as the home(s) of the manager(s).

The present embodiment provides a computer program to be used for the second and third cutting apparatuses 20B and 20C. The computer program causes computer(s) to operate as the information acquirer 56B and the information processor 57B of the second operation terminal 50B, the information acquirer 56C and the information processor 57C of the third operation terminal 50C, and the management terminals 18A and 18B.

The computer program may be stored, for example, in a nonvolatile memory. In other words, the techniques disclosed herein provide a computer-readable nonvolatile memory storing the program. Examples of the nonvolatile memory include: semiconductor memories, such as a ROM and a memory card; optical memories, such as a digital versatile disc (DVD), a magneto-optical (MO) disc, a minidisc (MD), a compact disc (CD), and a Blu-ray disc (BD); and magnetic memories, such as a magnetic tape and a flexible disk. The computer program may be transmitted to a cloud server through any of the nonvolatile memories just mentioned or a network (such as the Internet).

Although the preferred embodiment of the present invention has been described thus far, the foregoing embodiment is only illustrative, and the present invention may be embodied in various other forms.

In the foregoing embodiment, the cutting controllers 53A, 53B, and 53C are respectively provided in the first, second, and third operation terminals 50A, 50B, and 50C. The cutting controllers 53A, 53B, and 53C, however, may be provided in any other suitable manner. Alternatively, the cutting controllers 53A, 53B, and 53C may be provided, for example, in the management terminal 18A and/or the management terminal 18B such that the first to third cutting apparatuses 20A to 20C are controllable from remote location(s). In the foregoing embodiment, the information acquirer 56B and the information processor 57B are provided in the second operation terminal 50B, and the information acquirer 56C and the information processor 57C are provided in the third operation terminal 50C. The information acquirers 56B and 56C and the information processors 57B and 57C, however, may be provided in any other suitable manner. The information acquirers 56B and 56C and/or the information processors 57B and 57C may be provided, for example, in the server 12, the management terminal 18A, and/or the management terminal 18B.

In the foregoing embodiment, the second cutting system 16B includes the second operation terminal 50B, and the third cutting system 16C includes the image capturing device 27 and the third operation terminal 50C. The components of the second and third cutting systems 16B and 16C, however, are not limited to those just mentioned. Alternatively, the second cutting system 16B may include the image capturing device 27 and the third operation terminal 50C. In this case, the image capturing device 27 may be disposed such that the image capturing device 27 is able to capture images of the machining space 25b of the second cutting apparatus 20B. The memory 52C of the third operation terminal 50C may store status determining data that establishes associations between information on the statuses of the second cutting apparatus 20B (e.g., a machining-stopped status, a machining-in-progress status, and an error occurring status) and changes in the color of the LED lamp 26.

In the foregoing embodiment, the first to fourth display regions 81 to 84 of the first display screen 71 present the circular graphs 85, the operating ratios 86, the operating times 87, the non-operating times 88, the statistical graphs 89, and the error occurring times 90 in list form. The first to fourth display regions 81 to 84 of the first display screen 71 may present the operating conditions in any other suitable manner. When the time required for machining (hereinafter referred to as a "machining time") is counted for each type of the machining tool 6 or for each type of the workpiece 5, the first display screen 71 may present the machining time for each type of the machining tool 6 or the machining time for each type of the workpiece 5. The machining time is countable for each type of the machining tool 6 or for each type of the workpiece 5, for example, in the following cases: where the screen generator 61 acquires information on the type of the machining tool 6 or the type of the workpiece 5 from the job data; where user(s) enter(s) the type of the machining tool 6 or the type of the workpiece 5 using the input unit 51B of the second operation terminal 50B and/or the input unit 51C of the third operation terminal 50C; and where the image capturing device 27 captures images of the machining tool 6 or the workpiece 5.

## Claims

1. An operating condition management system (10) comprising:
at least one cutting apparatus (20B, 20C) to machine a workpiece (5);
at least one cutting controller (53B, 53C) to control the cutting apparatus (20B, 20C);
an image capturing device (27) to be controlled by the cutting controller (53B, 53C), the image capturing device (27) being configured to capture, at a fixed point, an image of the cutting apparatus (20B, 20C);
a memory (52C) configured to preliminarily store status determining data that establishes associations between states of the cutting apparatus (20B, 20C) and image data indicative of statuses of the cutting apparatus (20B, 20C);
an information acquirer (56B, 56C) communicably connected to the cutting controller (53B, 53C), the information acquirer (56B, 56C) being configured to acquire, from the cutting controller (53B, 53C), an image of the cutting apparatus (20B, 20C) captured by the image capturing device (27) as status discriminating information indicating the states of the cutting apparatus (20B, 20C);
an information processor (57B, 57C) communicably connected to the information acquirer (56B, 56C); and
a display unit (62) communicably connected to the information processor (57B, 57C), the display unit (62) being configured to present operating condition of the cutting apparatus (20B, 20C), wherein
the information processor (57B, 57C) includes a determiner (57C1) to determine the status of the cutting apparatus (20B, 20C) in accordance with the status discriminating information and the status determining data stored in the memory (52C),
**characterized in that**
the information processor (57B, 57C) further includes a calculator (57C2) to calculate an error occurring time of the cutting apparatus (20B, 20C) as the operating condition in accordance with a result of the determination made by the determiner (57C1), the error occurring time being an amount of time during which an error occurring status is recorded.

2. The operating condition management system (10) according to claim 1, wherein
the at least one cutting apparatus (20B, 20C) includes a plurality of cutting apparatuses (20B, 20C), and
the display unit (62) is configured to present the operating conditions of the cutting apparatuses (20B, 20C) such that the operating conditions are arranged in similar display formats.

3. The operating condition management system (10) according to claim 1 or 2, wherein
the at least one cutting apparatus (20B, 20C) includes
a first cutting apparatus (20A) to machine a workpiece (5), and
a second cutting apparatus (20B) to machine a workpiece (5),
the at least one cutting controller (53B, 53C) includes
a first cutting controller (53A) to control the first cutting apparatus (20A), and
a second cutting controller (53B) to control the second cutting apparatus (20A),
the operating condition management system (10) further comprises an operating condition recorder (55A) communicably connected to the first cutting controller (53A), the operating condition recorder (55A) being configured to record an operating condition of the first cutting apparatus (20A), and
the display unit (62) is configured to present the operating conditions of the first and second cutting apparatuses (20A, 20B) such that the operating conditions are arranged in similar display formats.

4. The operating condition management system (10) according to any one of claims 1 to 3, wherein
the cutting apparatus (20B, 20C) or the cutting apparatuses (20B, 20C) and the display unit (62) are installed in different buildings.

5. A computer program to be used for the cutting apparatus (20B, 20C) or the cutting apparatuses (20B, 20C) according to any one of claims 1 to 4, the computer program being operable to cause a computer to operate as the information acquirer (56B, 56C), the information processor (57B, 57C), and the display unit (62).

6. An operating condition management method for managing an operating condition of a cutting apparatus (20B, 20C) to machine a workpiece (5), the method comprising:
a capturing step involving capturing, at a fixed point, an image of the cutting apparatus (20B, 20C),
an information acquiring step involving acquiring, from a cutting controller (53B, 53C) to control the cutting apparatus (20B, 20C), status discriminating information indicating states of the cutting apparatus (20B, 20C), wherein the status discriminating information is an image of the cutting apparatus (20B, 20C) captured in the capturing step;
an information processing step including a determining step and a calculating step; and
a presenting step involving presenting an operating condition of the cutting apparatus (20B, 20C) on a display unit (62), wherein
the determining step involves determining the status of the cutting apparatus (20B, 20C) in accordance with the status discriminating information and the status determining data that establishes associations between the states of the cutting apparatus (20B, 20C) and image data indicative of statuses of the cutting apparatus (20B, 20C) and that is stored in a memory (52C),
**characterized in that**
the calculating step involves calculating an error occurring time of the cutting apparatus (20B, 20C) as the operating condition in accordance with a result of the determination made in the determining step, the error occurring time being an amount of time during which an error occurring status is recorded.

## Patentansprüche

1. Ein Betriebsbedingungsverwaltungssystem(10) umfassend:
mindestens eine Schneidvorrichtung (20B, 20C) zur Bearbeitung eines Werkstücks (5);
mindestens eine Schneidsteuerung (53B, 53C) zum Steuern der Schneidvorrichtung (20B, 20C);
eine Bilderfassungsvorrichtung (27), die von der Schneidsteuerung (53B, 53C) gesteuert wird, wobei die Bilderfassungsvorrichtung (27) konfiguriert ist an einem festen Punkt ein Bild der Schneidvorrichtung (20B, 20C) zu erfassen;
einen Speicher (52C), der konfiguriert ist vorläufig Statusbestimmungsdaten zu speichern, die Assoziationen zwischen Status der Schneidvorrichtung (20B, 20C) und Bilddaten, die Status der Schneidvorrichtung (20B, 20C) anzeigen, herstellen;
einen Informationserfasser (56B, 56C), der kommunikativ mit der Schneidsteuerung (53B, 53C) verbunden ist, wobei der Informationserfasser (56B, 56C) konfiguriert ist von der Schneidsteuerung (53B, 53C) ein Bild der Schneidvorrichtung (20B, 20C), das von der Bilderfassungsvorrichtung (27) erfasst wurde, als Statusunterscheidungsinformation, die die Status der Schneidvorrichtung (20B, 20C) anzeigt, zu erfassen;
einen Informationsprozessor (57B, 57C), der kommunizierend mit dem Informationserfasser (56B, 56C) verbunden ist; und
eine Anzeigeeinheit (62), die kommunikativ mit dem Informationsprozessor (57B, 57C) verbunden ist, wobei die Anzeigeeinheit (62) konfiguriert ist den Betriebsstatus der Schneidvorrichtung (20B, 20C) darzustellen, wobei
der Informationsprozessor (57B, 57C) eine Bestimmungseinrichtung (57C1) enthält, um den Status der Schneidvorrichtung (20B, 20C) in Übereinstimmung mit der Statusunterscheidungsinformation und den im Speicher (52C) gespeicherten Statusbestimmungsdaten zu bestimmen,
**dadurch gekennzeichnet dass**
der Informationsprozessor (57B, 57C) ferner einen Rechner (57C2) enthält, um eine Fehlerauftrittszeit der Schneidvorrichtung (20B, 20C) als die Betriebsbedingung in Übereinstimmung mit einem Ergebnis der durch die Bestimmungseinrichtung (57C1) durchgeführten Bestimmung zu berechnen, wobei die Fehlerauftrittszeit eine Zeitspanne ist, während der ein Fehlerauftrittsstatus aufgezeichnet wird.

2. Das Betriebsbedingungsverwaltungssystem (10) gemäß Anspruch 1, wobei
die mindestens eine Schneidvorrichtung (20B, 20C) eine Vielzahl von Schneidvorrichtungen (20B, 20C) umfasst, und
die Anzeigeeinheit (62) konfiguriert ist die Betriebsbedingungen der Schneidvorrichtungen (20B, 20C) so darzustellen, dass die Betriebsbedingungen in ähnlichen Anzeigeformaten angeordnet sind.

3. Das Betriebsbedingungsverwaltungssystem (10) gemäß Anspruch 1 oder 2, wobei
die mindestens eine Schneidvorrichtung (20B, 20C) umfasst
eine erste Schneidvorrichtung (20A) zur Bearbeitung eines Werkstücks (5), und
eine zweite Schneidvorrichtung (20B) zur Bearbeitung eines Werkstücks (5),
die mindestens eine Schneidsteuerung (53B, 53C) umfasst
eine erste Schneidsteuerung (53A) zur Steuerung der ersten Schneidvorrichtung (20A), und
eine zweite Schneidsteuerung (53B) zur Steuerung der zweiten Schneidvorrichtung (20A),
das Betriebsbedingungsverwaltungssystem (10) ferner einen Betriebsbedingungsrekorder (55A) umfasst, der kommunikativ mit der ersten Schneidsteuerung (53A) verbunden ist, wobei der Betriebsbedingungsrekorder (55A) konfiguriert ist, um eine Betriebsbedingung der ersten Schneidvorrichtung (20A) aufzuzeichnen, und
die Anzeigeeinheit (62) konfiguriert ist die Betriebsbedingungen der ersten und zweiten Schneidvorrichtung (20A, 20B) so darzustellen, dass die Betriebsbedingungen in ähnlichen Anzeigeformaten angeordnet sind.

4. Das Betriebsbedingungsverwaltungssystem (10) gemäß einem der Ansprüche 1 bis 3, wobei
die Schneidvorrichtung (20B, 20C) oder die Schneidvorrichtungen (20B, 20C) und die Anzeigeeinheit (62) in verschiedenen Gebäuden installiert sind.

5. Computerprogramm, das für die Schneidvorrichtung (20B, 20C) oder die Schneidvorrichtungen (20B, 20C) gemäß einem der Ansprüche 1 bis 4 zu verwenden ist, wobei das Computerprogramm betreibbar ist, um einen Computer zu veranlassen, als der Informationserfasser (56B, 56C), der Informationsprozessor (57B, 57C) und die Anzeigeeinheit (62) zu arbeiten.

6. Ein Betriebsbedingungsverwaltungsverfahren zum Verwalten einer Betriebsbedingung einer Schneidvorrichtung (20B, 20C) zur Bearbeitung eines Werkstücks (5), wobei das Verfahren umfasst:
einen Erfassungsschritt, der das Erfassen eines Bildes der Schneidvorrichtung (20B, 20C) an einem festen Punkt beinhaltet,
einen Informationserfassungsschritt, der das Erfassen einer Statusunterscheidungsinformation, die Status der Schneidvorrichtung (20B, 20C) anzeigen, von einer Schneidsteuerung (53B, 53C) zur Steuerung der Schneidvorrichtung (20B, 20C) beinhaltet, wobei die Statusunterscheidungsinformation ein Bild der Schneidvorrichtung (20B, 20C) ist, das in dem Erfassungsschritt erfasst wurde;
einen Informationsverarbeitungsschritt, der einen Bestimmungsschritt und einen Berechnungsschritt umfasst; und
einen Anzeigeschritt, der die Anzeige einer Betriebsbedingung der Schneidvorrichtung (20B, 20C) auf einer Anzeigeeinheit (62) beinhaltet, wobei
der Bestimmungsschritt das Bestimmen des Status der Schneidvorrichtung (20B, 20C) in Übereinstimmung mit der Statusunterscheidungsinformation und den Statusbestimmungsdaten beinhaltet, die Assoziationen zwischen den Status der Schneidvorrichtung (20B, 20C) und Bilddaten, die Status der Schneidvorrichtung (20B, 20C) anzeigen, herstellen und die in einem Speicher (52C) gespeichert sind,
**dadurch gekennzeichnet dass**
der Berechnungsschritt das Berechnen einer Fehlerauftrittszeit der Schneidvorrichtung (20B, 20C) als Betriebsbedingung in Übereinstimmung mit einem Ergebnis der in dem Bestimmungsschritt durchgeführten Bestimmung beinhaltet, wobei die Fehlerauftrittszeit eine Zeitspanne ist, während der ein Fehlerauftrittsstatus aufgezeichnet wird.

## Revendications

1. Système de gestion de conditions de fonctionnement (10) comprenant:
au moins un appareil de coupe (20B, 20C) pour usiner une pièce (5);
au moins un dispositif de commande de coupe (53B, 53C) pour commander l'appareil de coupe (20B, 20C);
un dispositif de capture d'image (27) devant être commandé par le dispositif de commande de coupe (53B, 53C), le dispositif de capture d'image (27) étant configuré pour capturer, à un point fixe, une image de l'appareil de coupe (20B, 20C);
une mémoire (52C) configurée pour stocker de manière préliminaire des données de détermination d'état qui établissent des associations entre des états de l'appareil de coupe (20B, 20C) et des données d'image indicatives des états de l'appareil de coupe (20B, 20C);
un acquéreur d'informations (56B, 56C) connecté de manière communicante au dispositif de commande de coupe (53B, 53C), l'acquéreur d'informations (56B, 56C) étant configuré pour acquérir, à partir du dispositif de commande de coupe (53B, 53C), une image de l'appareil de coupe (20B, 20C) capturée par le dispositif de capture d'images (27) en tant qu'informations de discrimination d'état indiquant les états de l'appareil de coupe (20B, 20C);
un processeur d'informations (57B, 57C) connecté de manière communicante à l'acquéreur d'informations (56B, 56C); et
une unité d'affichage (62) connectée de manière communicante au processeur d'informations (57B, 57C), l'unité d'affichage (62) étant configurée pour présenter l'état de fonctionnement de l'appareil de coupe (20B, 20C), dans lequel
le processeur d'informations (57B, 57C) comprend un dispositif de détermination (57C1) pour déterminer l'état de l'appareil de coupe (20B, 20C) en fonction des informations de discrimination d'état et des données de détermination d'état stockées dans la mémoire (52C),
**caractérisé en ce que**
le processeur d'informations (57B, 57C) comprend en outre un calculateur (57C2) pour calculer un temps d'apparition d'erreur de l'appareil de coupe (20B, 20C) en tant que condition de fonctionnement conformément à un résultat de la détermination effectuée par le déterminateur (57C1), le temps d'apparition d'erreur étant une quantité de temps pendant laquelle un état d'apparition d'erreur est enregistré.

2. Système de gestion de conditions de fonctionnement (10) selon la revendication 1, dans lequel
ledit au moins un appareil de coupe (20B, 20C) comprend une pluralité d'appareils de coupe (20B, 20C), et
l'unité d'affichage (62) est configurée pour présenter les conditions de fonctionnement des appareils de coupe (20B, 20C) de telle sorte que les conditions de fonctionnement sont disposées dans des formats d'affichage similaires.

3. Système de gestion de conditions de fonctionnement (10) selon les revendications 1 ou 2, dans lequel
ledit au moins un appareil de coupe (20B, 20C) comprend
un premier appareil de coupe (20A) pour usiner une pièce (5), et
un second appareil de coupe (20B) pour usiner une pièce (5),
ledit au moins un dispositif de commande de coupe (53B, 53C) comprend
un premier dispositif de commande de coupe (53A) pour commander le premier appareil de coupe (20A), et
un second dispositif de commande de coupe (53B) pour commander le second appareil de coupe (20A),
le système de gestion de conditions de fonctionnement (10) comprend en outre un enregistreur de conditions de fonctionnement (55A) connecté de manière communicante au premier dispositif de commande de coupe (53A), l'enregistreur de conditions de fonctionnement (55A) étant configuré pour enregistrer une condition de fonctionnement du premier appareil de coupe (20A), et
l'unité d'affichage (62) est configurée pour présenter les conditions de fonctionnement des premier et second appareils de coupe (20A, 20B) de telle sorte que les conditions de fonctionnement sont disposées dans des formats d'affichage similaires.

4. Système de gestion de conditions de fonctionnement (10) selon l'une quelconque des revendications 1 à 3, dans lequel
l'appareil de coupe (20B, 20C) ou les appareils de coupe (20B, 20C) et l'unité d'affichage (62) sont installés dans des bâtiments différents.

5. Programme informatique à utiliser pour l'appareil de coupe (20B, 20C) ou les appareils de coupe (20B, 20C) selon l'une quelconque des revendications 1 à 4, le programme informatique pouvant être mis en oeuvre pour amener un ordinateur à fonctionner en tant qu'acquéreur d'informations (56B, 56C), processeur d'informations (57B, 57C) et unité d'affichage (62).

6. Procédé de gestion de conditions de fonctionnement pour gérer une condition de fonctionnement d'un appareil de coupe (20B, 20C) afin d'usiner une pièce à usiner (5), le procédé comprenant:
une étape de capture impliquant la capture, en un point fixe, d'une image de l'appareil de coupe (20B, 20C),
une étape d'acquisition d'informations impliquant l'acquisition, à partir d'un dispositif de commande de coupe (53B, 53C) pour commander l'appareil de coupe (20B, 20C), d'informations de discrimination d'état indiquant des états de l'appareil de coupe (20B, 20C), dans laquelle les informations de discrimination d'état sont une image de l'appareil de coupe (20B, 20C) capturée dans l'étape de capture;
une étape de traitement des informations comprenant une étape de détermination et une étape de calcul; et
une étape de présentation impliquant la présentation d'une condition de fonctionnement de l'appareil de coupe (20B, 20C) sur une unité d'affichage (62), dans laquelle
l'étape de détermination implique de déterminer l'état de l'appareil de coupe (20B, 20C) conformément aux informations de discrimination d'état et aux données de détermination d'état qui établissent des associations entre les états de l'appareil de coupe (20B, 20C) et les données d'image indicatives des états de l'appareil de coupe (20B, 20C) et qui sont stockées dans une mémoire (52C),
**caractérisé en ce que**
l'étape de calcul implique le calcul d'un temps d'apparition d'erreur du dispositif de coupe (20B, 20C) en tant que condition de fonctionnement conformément à un résultat de la détermination effectuée dans l'étape de détermination, le temps d'apparition d'erreur étant une quantité de temps pendant laquelle un état d'apparition d'erreur est enregistré.
